# EUROPÄISCHE PATENTSCHRIFT

(11) **EP 0 538 287 B1**
(45) Veröffentlichungstag und Bekanntmachung des Hinweises auf die Patenterteilung: **05.04.1995**
(21) Anmeldenummer: 91911834.9
(22) Anmeldetag: 27.06.1991
(51) Int. Cl.: C04B 37/02

(54) **KERAMIKRING VERBUNDEN DURCH EIN HARTLOT MIT EINEM TEIL AUS METALL**
CERAMIC RING BRAZED TO A METAL COMPONENT
PIECE EN CERAMIQUE SOUDEE A UNE PIECE EN METAL PAR BRASAGE FORT

(30) Priorität: 06.07.1990 DE 4021583
(43) Veröffentlichungstag der Anmeldung: 28.04.1993
(73) Patentinhaber: Hoechst CeramTec Aktiengesellschaft, 95100 Selb (DE)
(72) Erfinder: RAJNER, Walter, D-8500 Nürnberg (DE); STINGL, Peter, D-8560 Lauf (DE)
(74) Vertreter: Hoffmann, Peter, Dipl.-Chem.
(86) Internationale Anmeldenummer: EP9101206
(87) Internationale Veröffentlichungsnummer: WO9200936

(56) Entgegenhaltungen:
- DE-A- 3 632 614
- DE-A- 3 924 225
- DE-A- 3 924 591

## Beschreibung

Die Erfindung betrifft einen Keramikring der mit einem Teil aus Metall durch ein Hartlo verbunden ist.

Hartlotverbindungen der genannten Art sind bekannt. Sie haben jedoch den Nachteil, daß Spannungsrisse in der Keramik während der Abkühlphase nach dem Hartlöten auftreten.

Hier will die Erfindung Abhilfe schaffen. Die Aufgabe wird durch besondere Gestaltung der Verbindungsfläche der Keramikring erreicht, die dadurch gekennzeichnet ist, daß die Außenkante der Verbindungsfläche des Keramikringes mit einer Fase versehen ist, deren Fasenwinkel 15 bis 45° beträgt, wobei die Fase einen Kantenradius von ≦ 0,3 mm aufweist und ihre Höhe mindestens 5 bis 30 % der Wandstärke des Keramikringes jedoch mindestens 0,1 mm beträgt.

Bevorzugt beträgt der Fasenwinkel 30°. Die Fase kann gescheuert sein und neben der üblichen Metallisierungsschicht aus Molybdän/Mangan oder Wolfram eine Nickelschicht von 1 bis 6 »m Dicke aufweisen.

Die Vorteile der Erfindung sind im wesentlichen darin zu sehen, daß Spannungsrisse in der Keramik bei verbesserter Haftfestigkeit vermieden werden.

Im folgenden wird die Erfindung näher erläutert.

Ein Keramikring ist mit einer Fase versehen, deren Fasenwinkel 15° bis 45°, vorzugsweise 30° betragen kann. Die Fase kann neben der Metallisierungsschicht aus Molybdän/Mangan oder Wolfram, deren Dicke im allgemeinen zwischen 5 - 20 »m beträgt eine Nickelschicht 5 von 1 bis 6 »m aufweisen. Eine Metallplatte aus beispielsweise Kupfer ist mittels Hartlot mit dem Keramikring verbunden. Die Mindesthöhe H der Fase soll 0,1 mm betragen bzw. 5 bis 30 % der Wandstärke des Keramikrings. Verbindungskörper der genannten Art werden für elektrische Bauteile eingesetzt. Die erfindungsgemaße Verbindung eines Keramikringes mit einem Teil aus Metall eignet sich sowohl für Flächenlötungen als auch für Schneidenlötungen.

## Patentansprüche

1. Keramikring, der mit einem Teil aus Metall durch ein Hartlot verbunden ist, wobei die Verbindungsfläche des Keramikringes mit einer an sich bekannten Metallisierungsschicht versehen ist, dadurch gekennzeichnet, daß die Außenkante der Verbindungsfläche des Keramikringes mit einer Fase versehen ist, deren Fasenwinkel 15 bis 45° beträgt, wobei die Fase einen Kantenradius von ≦ 0,3 mm aufweist und ihre Höhe mindestens 5 bis 30% der Wandstärke des Keramikringes, jedoch mindestens 0,1 mm beträgt.

2. Keramikring nach Anspruch 1, dadurch gekennzeichnet, daß der Fasenwinkel 30° beträgt.

3. Keramikring nach Anspruch 1, dadurch gekennzeichnet, daß die Fase gescheuert ist.

4. Keramikring nach Anspruch 1, dadurch gekennzeichnet, daß die Fase eine Nickelschicht von 1 bis 6 »m Dicke aufweist.

## Claims

1. A ceramic ring which is joined to a metal component by a brazing solder, the join surface of the ceramic ring being provided with a metallizing layer known per se, wherein the outer edge of the join surface of the ceramic ring is provided with a chamfer whose chamfer angle is 15 to 45°, the chamfer having an edge radius of ≦ 0.3 mm and its height being at least 5 to 30% of the wall thickness of the ceramic ring, but at least 0.1 mm.

2. The ceramic ring as claimed in claim 1, wherein the chamfer angle is 30°.

3. The ceramic ring as claimed in claim 1, wherein the chamfer is galled.

4. The ceramic ring as claimed in claim 1, wherein the chamfer has a nickel layer 1 to 6 »m thick.

## Revendications

1. Bague en céramique assemblée à une pièce en métal par brasage fort, la face d'assemblage de la bague en céramique étant pourvue d'une couche de métallisation en soi connue, **caractérisée** en ce que l'arête extérieure de la face d'assemblage de la bague en céramique est dotée d'un chanfrein dont l'angle de chanfrein a une valeur de 15 à 45°, le chanfrein présentant un rayon d'arête ≦ 0,3 mm et sa hauteur étant au moins égale à 5 à 30 % de l'épaisseur de paroi de la bague en céramique, mais avec une valeur minimale de 0,1 mm.

2. Bague en céramique selon la revendication 1, **caractérisée** en ce que l'angle du chanfrein est égal à 30°.

3. Bague en céramique selon la revendication 1, **caractérisée** en ce que le chanfrein est poli.

4. Bague en céramique selon la revendication 1, **caractérisée** en ce que le chanfrein présente une couche de nickel de 1 à 6 »m d'épaisseur.
